# EUROPÄISCHE PATENTSCHRIFT

(11) **EP 3 769 607 B1**
(45) Veröffentlichungstag und Bekanntmachung des Hinweises auf die Patenterteilung: **10.08.2022**
(21) Anmeldenummer: 20169614.3
(22) Anmeldetag: 15.04.2020
(51) Int. Cl.: A01F 29/22, B24B 3/36

(54) **SCHLEIFSTEIN UND VERFAHREN ZUM SCHLEIFEN**
GRINDING STONE AND GRINDING METHOD
PIERRE DE RECTIFICATION ET PROCÉDÉ DE RECTIFICATION

(30) Priorität: 24.07.2019 DE 102019119943
(43) Veröffentlichungstag der Anmeldung: 27.01.2021
(73) Patentinhaber: CLAAS Selbstfahrende Erntemaschinen GmbH, 33428 Harsewinkel (DE)
(72) Erfinder: Kersten, Johannes, 49176 Hilter a. TW (DE); Herter, Felix, 33428 Harsewinkel (DE); Diekamp, Andreas, 49176 Hilter (DE); Heitmann, Christoph, 48231 Warendorf (DE)
(74) Vertreter: CLAAS Gruppe

(56) Entgegenhaltungen:
- EP-A1- 1 034 892
- EP-A1- 2 527 087
- EP-A2- 2 764 767
- DE-A1-102015 120 564
- DE-A1-102017 105 439

## Beschreibung

Die Erfindung betrifft zunächst einen Schleifstein mit einer stabförmigen, zu einer Arbeitsseite von einer der Arbeitsseite gegenüberliegenden Gegenseite durch den Schleifstein geführten und mit dem Schleifstein verbundenen Messelektrode. Die Erfindung betrifft weiterhin ein Verfahren zum Schleifen von um eine Achse rotierbaren Messern eines Zerkleinerungsaggregats, wobei eine Arbeitsseite eines Schleifsteins in einer zu der Achse radialen Richtung auf einen Messerrücken der Messer geführt wird, und wobei mittels eines stabförmigen, von einer der Arbeitsseite gegenüberliegenden Gegenseite durch den Schleifstein geführten und mit dem Schleifstein verbundenen Messelektrode ein Kontakt des Schleifsteins mit den Messerrücken erkannt wird.

EP 2 527 087 A1 offenbart einen Feldhäcksler mit einem Zerkleinerungsaggregat, der um eine Achse rotierbare Messer, eine zu der Achse parallel angeordnete ruhende Gegenschneide und eine automatische Schleifeinrichtung für die Messer aufweist. In einer zu der Achse radialen Richtung wird ein Schleifstein der oben genannten Art auf einen Messerrücken der Messer geführt. Eine stabförmige Messelektrode ist von einer der Arbeitsseite gegenüberliegenden Gegenseite durch den Schleifstein geführt und mit dem Schleifstein vergossen. Die Messelektrode erkennt einen Kontakt des Schleifsteins mit den Messerrücken der rotierenden Messer, eine Steuerungseinrichtung bestimmt aus der Dauer des Kontakts sowie Drehzahl und Durchmesser des Zerkleinerungsaggregats laufend die Länge des jeweiligen Messerrückens in der Umfangsrichtung und beurteilt danach den Verschleißzustand der Messer.

Im Hintergrund der Erfindung schlägt EP 2 764 767 A2 vor, die Drehzahl der Messer zu variieren, um ein radiales "Springen" des Schleifsteins in die Zwischenräume zwischen den rotierenden Messern zu vermeiden. Durch die radiale Bewegung wird der Schleifstein zu einer Schwingung in radialer Richtung angeregt, die die Messung der Kontaktdauer und die darauf gestützte Beurteilung des Verschleißzustands der Messer erschwert.

Der Erfindung liegt die Aufgabe zugrunde, das Erkennen des Kontakts zu verbessern.

Ausgehend von dem bekannten Schleifstein wird erfindungsgemäß vorgeschlagen, einen Schwingungsdämpfer vorzusehen, der ein Federelement und ein Dämpferelement aufweist, und der die Messelektrode auf der Gegenseite mit dem Schleifstein verbindet. Die Messelektrode des erfindungsgemäßen Schleifsteins ist so von dem Schleifstein schwingungstechnisch entkoppelt. Ähnlich den Schwingungsdämpfern (sog. "Stoßdämpfer"), die in Kraftfahrzeugen den Fahrbahnkontakt der Reifen unabhängig vom Bewegungszustand der Karosserie sicherstellen, verbessert der Schwingungsdämpfer im erfindungsgemäßen Schleifstein den Kontakt der Messelektrode mit dem Messerrücken.

Vorzugsweise weist ein erfindungsgemäßer Schleifstein eine auf der Arbeitsseite in den Schleifstein eingesetzte Führungsbuchse auf, die die Messelektrode führt. Die Führungsbuchse vermeidet ein Anhaften des Messelements an dem erfindungsgemäßen Schleifstein.

Vorzugsweise ist das Federelement eines erfindungsgemäßen Schleifsteins vorgespannt. Ein Ausweichen der Messelektrode aus der Ruhelage in dem erfindungsgemäßen Schleifstein wird so erschwert.

Erfindungsgemäß weist ein Zerkleinerungsaggregat um eine Achse rotierbare Messer, eine zu der Achse parallel angeordnete, ruhende Gegenschneide und eine automatische Schleifeinrichtung für die Messer mit einem solchen Schleifstein auf, der in einer zu der Achse radialen Richtung auf einen Messerrücken der Messer geführt ist. Der erfindungsgemäße Zerkleinerungsapparat zeichnet sich gleichermaßen durch die Vorteile des erfindungsgemäßen Schleifsteins aus.

Erfindungsgemäß weist eine landwirtschaftliche Erntemaschine ein solches Zerkleinerungsaggregat auf zum Zerkleinern eines von der Erntemaschine geernteten Ernteguts. Die erfindungsgemäße Erntemaschine zeichnet sich gleichermaßen durch die Vorteile des erfindungsgemäßen Zerkleinerungsapparats aus.

Ausgehend von dem bekannten Verfahren wird erfindungsgemäß vorgeschlagen, dass die Messelektrode in der radialen Richtung federnd und gedämpft mit dem Schleifstein verbunden ist. Das erfindungsgemäße Verfahren wird mit einem erfindungsgemäßen Zerkleinerungsaggregat ausgeführt und zeichnet sich gleichermaßen durch die dort aufgeführten Vorteile aus.

Vorzugsweise bestimmt in einem erfindungsgemäßen Verfahren eine Steuerungseinrichtung des Zerkleinerungsaggregats aus einer Dauer des Kontakts, einer Drehzahl und einem Durchmesser des Zerkleinerungsaggregats eine Länge des Messerrückens in einer Umfangsrichtung des Zerkleinerungsaggregats. Ein solches erfindungsgemäßes Verfahren erlaubt die fortlaufende Beurteilung des Verschleißzustands der Messer.

Die Erfindung wird nachstehend anhand eines Ausführungsbeispiels, das in den Figuren dargestellt ist, näher erläutert. Es zeigt:
- Fig. 1:: Eine erfindungsgemäße landwirtschaftliche Erntemaschine,
- Fig. 2:: das erfindungsgemäße Zerkleinerungsaggregat der Erntemaschine,
- Fig. 3:: ein Detail des erfindungsgemäßen Zerkleinerungsapparats und

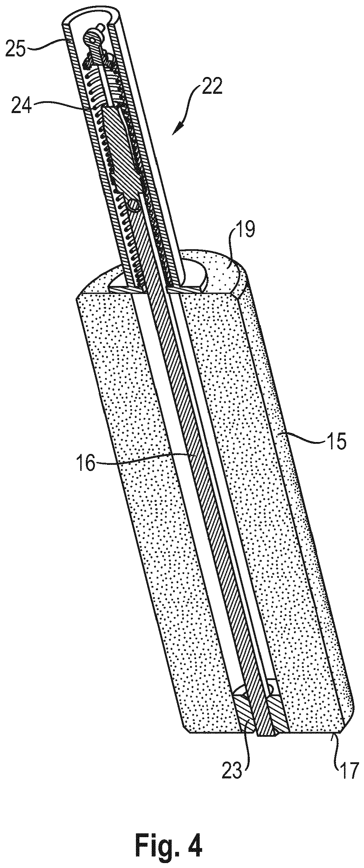

- Fig. 4:: den erfindungsgemäßen Schleifstein des Zerkleinerungsapparats

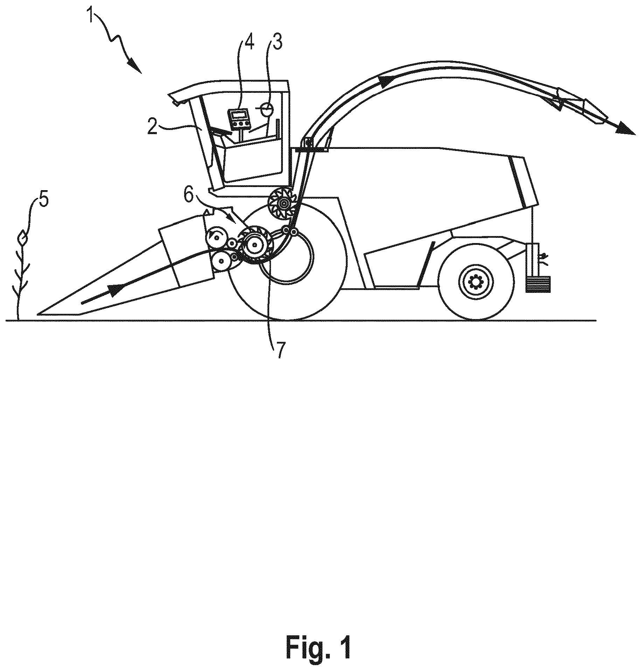

In **Figur 1** ist eine erfindungsgemäße landwirtschaftliche Erntemaschine **1** - hier: ein selbstfahrender Feldhäcksler, wie ihn die Anmelderin unter der Modellreihenbezeichnung "Jaguar" anbietet - dargestellt. Die Erntemaschine **1** weist in einer Fahrerkabine **2** eine für einen Bediener **3** zugängliche Steuereinrichtung **4** auf.

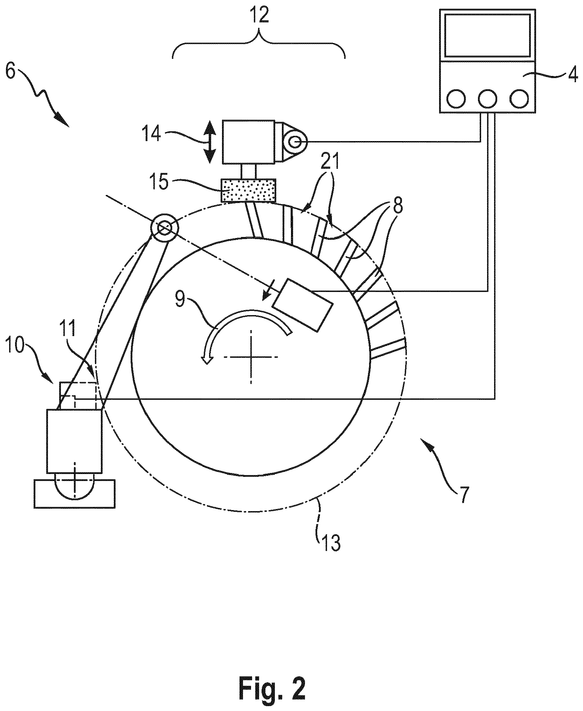

Im Erntebetrieb wird die Erntemaschine **1** eingesetzt, um aufgenommenes Erntegut **5,** in Form eines vorgepressten Erntegutstrangs dem in Figur **2** im Detail dargestellten Zerkleinerungsaggregat **6** zuzuführen, zu zerkleinern ("häckseln"), um es anschließend aus der Erntemaschine **1** auf ein (nicht gezeigtes) Transportfahrzeug auszuwerfen. Der Weg des Ernteguts **5** durch die Erntemaschine **1** ist in **Figur 1** durch eine mit Pfeilen versehene Linie dargestellt.

Das Zerkleinerungsaggregat **6** weist eine Häckseltrommel **7** auf, die mit 32 Messern **8** besetzt ist. Die Häckseltrommel **7** ist in Drehrichtung **9** entgegen dem Uhrzeigersinn mittels eines nicht gezeigten Antriebsstrangs mit 800 *U*/*min* antreibbar. Das Zerkleinerungsaggregat **6** weist weiterhin eine gegenüber der rotierenden Häckseltrommel **7** ruhend gelagerte Gegenschneide **10** auf. Die Gegenschneide **10** und die Messer **8** der Häckseltrommel **7** bilden zusammen einen Schneidspalt **11,** an dem das Erntegut **5** in Partikel gewünschter Schnittlänge gehäckselt wird. Die Messer **8** sind lösbar an der Häckseltrommel **7** befestigt und können bei Verschleiß oder für eine Umrüstung der Häckseltrommel **7** demontiert werden.

Für einen effizienten Zerkleinerungsvorgang müssen am Zerkleinerungsaggregat **6** in bestimmten Abständen Instandhaltungsvorgänge durchgeführt werden. Dazu zählen insbesondere das Einstellen der Gegenschneide **10** auf eine präzise Abstandslage zur Häckseltrommel **7** und das Schleifen der Messer **8.** Das Zerkleinerungsaggregat **6** weist zu diesem Zweck eine Schleifeinrichtung **12** mit einem am Hüllkreis **13** der Messer **8** bewegbaren und in radialer Richtung **14** vorgespannten erfindungsgemäßen Schleifstein **15** auf.

Der Schleifstein **15** kann bei rotierender Häckseltrommel **7** über die gesamte wirksame Breite der Häckseltrommel **7** hin- und her bewegt werden, um die Messer **8** über deren gesamte Länge zu schleifen und zu schärfen. Zum Aufbringen der zum Schleifen der Messer **8** nötigen Reibkraft ist der Schleifstein **15** gegenüber der Häckseltrommel **7** in der radialen Richtung **14** in gewissen Grenzen beweglich.

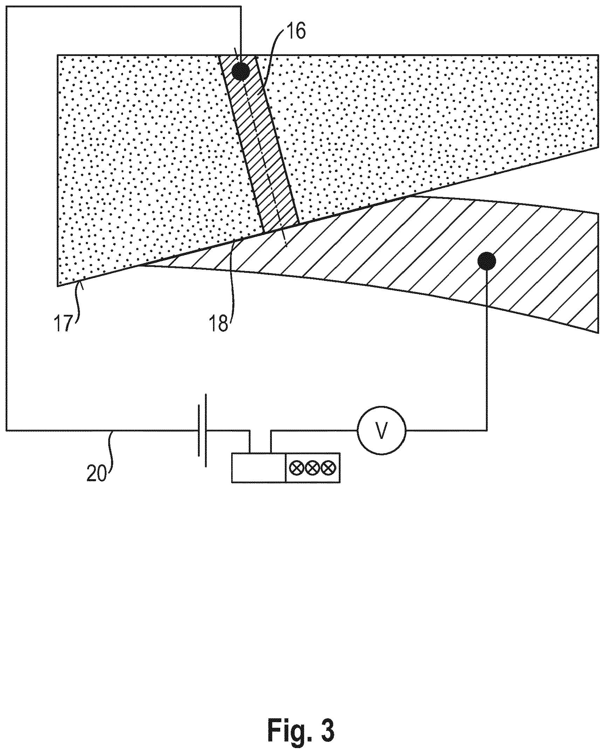

Wie in der Detaildarstellung in **Figur 3** gezeigt, weist der Schleifstein **15** eine stabförmige Messelektrode **16** auf, der zu einer Arbeitsseite **17** des Schleifsteins **15,** in der der Schleifstein **15** mit dem Messerrücken **18** der Messer **8** in Kontakt steht, ausgehend von einer der Arbeitsseite **17** gegenüberliegenden Gegenseite **19** durch den Schleifstein **15** geführt ist.

Im Moment des Kontakts wird über den Messerrücken **18** und die Messelektrode **16** ein Stromkreis **20** geschlossen und es fließt ein Messstrom der in der Steuereinrichtung **4** erfasst wird. Durch seine Vorspannung wird der Schleifstein **15** im Betrieb periodisch mit einer Frequenz von einigen Kilohertz in die Zwischenräume **21** zwischen den Messern **8** geschoben und so zu einer Schwingung in der radialen Richtung **14** angeregt. Durch diese Schwingung verliert der Schleifstein **15** kurzzeitig den Kontakt mit den Messerrücken **18.**

Die Messelektrode **16** ist mit dem Schleifstein **15** durch einen Schwingungsdämpfer **22** verbunden und an der Arbeitsseite **17** in einer Führungsbuchse **23** reibungsarm geführt. Ein Federelement **24** des Schwingungsdämpfers **22** ist in einer an dem Schleifstein **15** angebrachten Hülse **25** vorgespannt. Die Messelektrode **16** ist dadurch von der Schwingung des Schleifsteins **15** in der radialen Richtung **14** entkoppelt und behält insbesondere den Kontakt mit den Messerrücken **18,** wenn der Schleifstein **15** diesen kurzzeitig verliert.

### Bezugszeichenliste

- 1: Erntemaschine
- 2: Fahrerkabine
- 3: Bediener
- 4: Steuereinrichtung
- 5: Erntegut
- 6: Zerkleinerungsaggregat
- 7: Häckseltrommel
- 8: Messer
- 9: Drehrichtung
- 10: Gegenschneide
- 11: Schneidspalt
- 12: Schleifeinrichtung
- 13: Hüllkreis
- 14: radiale Richtung
- 15: Schleifstein
- 16: Messelektrode
- 17: Arbeitsseite
- 18: Messerrücken
- 19: Gegenseite
- 20: Stromkreis
- 21: Zwischenraum
- 22: Schwingungsdämpfer
- 23: Führungsbuchse
- 24: Federelement
- 25: Hülse

## Patentansprüche

1. Schleifstein (15) mit einer stabförmigen, zu einer Arbeitsseite (17) von einer der Arbeitsseite (17) gegenüberliegenden Gegenseite (19) durch den Schleifstein (15) geführten und mit dem Schleifstein (15) verbundenen Messelektrode (16), ***gekennzeichnet durch*** einen Schwingungsdämpfer (22), der ein Federelement (24) und ein Dämpferelement aufweist, und der die Messelektrode (16) auf der Gegenseite (19) mit dem Schleifstein (15) verbindet.

2. Schleifstein (15) nach dem vorgenannten Anspruch, ***gekennzeichnet durch*** eine auf der Arbeitsseite (17) in den Schleifstein (15) eingesetzte Führungsbuchse (23), die die Messelektrode (16) führt.

3. Schleifstein (15) nach einem der vorgenannten Ansprüche, ***dadurch gekennzeichnet, dass*** das Federelement (24) vorgespannt ist.

4. Zerkleinerungsaggregat (6) mit um eine Achse rotierbaren Messern (8), einer zu der Achse parallel angeordneten, ruhenden Gegenschneide (10) und einer automatischen Schleifeinrichtung (12) für die Messer (8), ***dadurch gekennzeichnet, dass*** die Schleifeinrichtung (12) einen Schleifstein (15) nach einem der vorgenannten Ansprüche aufweist, der in einer zu der Achse radialen Richtung (14) auf einen Messerrücken (18) der Messer (8) geführt ist.

5. Landwirtschaftliche Erntemaschine (1), ***gekennzeichnet durch*** ein Zerkleinerungsaggregat (6) nach dem vorgenannten Anspruch zum Zerkleinern eines von der Erntemaschine (1) geernteten Ernteguts (5).

6. Verfahren zum Schleifen von um eine Achse rotierbaren Messern (8) eines Zerkleinerungsaggregats (6), wobei eine Arbeitsseite (17) eines Schleifsteins (15) in einer zu der Achse radialen Richtung (14) auf einen Messerrücken (18) der Messer (8) geführt wird, und wobei mittels eines stabförmigen, von einer der Arbeitsseite (17) gegenüberliegenden Gegenseite (19) durch den Schleifstein (15) geführten und mit dem Schleifstein (15) verbundenen Messelektrode (16) ein Kontakt des Schleifsteins (15) mit den Messerrücken (18) erkannt wird, ***dadurch gekennzeichnet, dass*** die Messelektrode (16) in der radialen Richtung (14) federnd und gedämpft mit dem Schleifstein (15) verbunden ist.

7. Verfahren nach dem vorgenannten Anspruch, ***dadurch gekennzeichnet, dass*** eine Steuerungseinrichtung des Zerkleinerungsaggregats (6) aus einer Dauer des Kontakts, einer Drehzahl und einem Durchmesser des Zerkleinerungsaggregat (6) eine Länge des Messerrückens (18) in einer Umfangsrichtung des Zerkleinerungsaggregats (6) bestimmt.

## Claims

1. A grindstone (15) with a rod-shaped measuring electrode (16) which is guided through the grindstone (15) to a working side (17) from a side (19) which is opposite to the working side (17) and is connected to the grindstone (15), ***characterized by*** a vibration absorber (22) which has a spring element (24) and an absorbing element, and which connects the measuring electrode (16) to the grindstone (15) on the opposite side (19).

2. The grindstone (15) according to the preceding claim, ***characterized by*** a guide bushing (23) which is inserted into the grindstone (15) on the working side (17) and which guides the measuring electrode (16).

3. The grindstone (15) according to one of the preceding claims, ***characterized in that*** the spring element (24) is pre-stressed.

4. A comminution assembly (6) with blades (8) which can rotate about an axis, a stationary counter cutter (10) which is disposed parallel to the axis and an automatic sharpening device (12) for the blades (8), ***characterized in that*** the sharpening device (12) has a grindstone (15) according to one of the preceding claims which is guided in a direction (14) which is radial to the axis onto a blade back (18) of the blade (8).

5. An agricultural harvesting machine (1), ***characterized by*** a comminution assembly (6) according to the preceding claim, for comminution of harvested material which is harvested by the harvesting machine (1).

6. A method for sharpening blades (8) of a comminution assembly (6) which can rotate about an axis, wherein a working side (17) of a grindstone (15) is guided in a direction (14) which is radial to the axis onto a blade back (18) of the blade (8), and wherein a contact of the grindstone (15) with the blade back (18) is detected by means of a rod-shaped measuring electrode (16) which is guided through the grindstone (15) from a side (19) which is opposite to the working side (17) and which is connected to the grindstone (15), ***characterized in that*** the measuring electrode (16) is connected to the grindstone (15) in a radial direction (14) in a manner which is spring-loaded and damped.

7. The method according to the preceding claim, ***characterized in that*** a control device of the comminution assembly (6) determines a length of the blade back (18) in a circumferential direction of the comminution assembly (6) from a contact duration, a rotational speed and a diameter of the comminution assembly (6).

## Revendications

1. Pierre à affûter (15) comprenant une électrode de mesure en forme de barre (16) guidée à travers la pierre à affûter (15) vers un côté de travail (17) depuis un côté opposé (19) situé à l'opposé du côté de travail (17) et reliée à la pierre à affûter (15), **caractérisée par** un amortisseur de vibrations (22) qui comporte un élément de ressort (24) et un élément amortisseur, et qui relie l'électrode de mesure (16) sur le côté opposé (19) à la pierre à affûter (15).

2. Pierre à affûter (15) selon la revendication précédente, **caractérisée par** une douille de guidage (23) qui est insérée sur le côté de travail (17) dans la pierre à affûter (15) et qui guide l'électrode de mesure (16).

3. Pierre à affûter (15) selon une des revendications précédentes, **caractérisée en ce que** l'élément de ressort (24) est précontraint.

4. Organe de broyage (6) comprenant des couteaux (8) tournant autour d'un axe, une contre-lame fixe (10) disposée parallèlement à l'axe et un équipement d'affûtage automatique (12) pour les couteaux (8), **caractérisé en ce que** l'équipement d'affûtage (12) comporte une pierre à affûter (15) selon une des revendications précédentes, laquelle est guidée, dans une direction (14) radiale à l'axe, vers un dos de couteau (18) des couteaux (8).

5. Machine de travail agricole (1), **caractérisée par** un organe de broyage (6) selon la revendication précédente pour broyer un produit récolté (5) récolté par la machine de récolte (1).

6. Procédé d'affûtage de couteaux (8), tournant autour d'un axe, d'un organe de broyage (6), un côté de travail (17) d'une pierre à affûter (15) étant guidé dans une direction (14) radiale à l'axe vers un dos de couteau (18) des couteaux (8), et un contact de la pierre à affûter (15) avec le dos de couteau (18) étant décelé au moyen d'une électrode de mesure en forme de barre (16) guidée à travers la pierre à affûter (15) depuis un côté opposé (19) situé à l'opposé du côté de travail (17) et reliée à la pierre à affûter (15), **caractérisé en ce que** l'électrode de mesure (16) est reliée à la pierre à affûter (15) de manière élastique et amortie dans la direction radiale (14) .

7. Procédé selon la revendication précédente, **caractérisé en ce qu'**un équipement de commande de l'organe de broyage (6) détermine, à partir de la durée du contact, d'une vitesse de rotation et d'un diamètre de l'organe de broyage (6), une longueur du dos de couteau (18) dans une direction circonférentielle de l'organe de broyage (6).
